# EUROPÄISCHE PATENTSCHRIFT

(11) **EP 0 987 082 B1**
(45) Veröffentlichungstag und Bekanntmachung des Hinweises auf die Patenterteilung: **06.10.2004**
(21) Anmeldenummer: 99112931.3
(22) Anmeldetag: 05.07.1999
(51) Int. Cl.: B23Q 11/00, B23Q 3/10, B23Q 1/66

(54) **Werkzeugmaschine mit einer ausserhalb des Werkstücktisches erstreckenden Werkstückeinspannvorrichtung**
Machine tool with a workpiece holding device which extends outside the work table
Machine outil avec dispositif de fixation d'une pièce s'étendant en dehors de la table porte-pièce

(30) Priorität: 15.09.1998 DE 19842147; 29.10.1998 DE 19849833
(43) Veröffentlichungstag der Anmeldung: 22.03.2000
(73) Patentinhaber: CHIRON-WERKE GMBH & CO. KG, 78532 Tuttlingen (DE)
(72) Erfinder: Schweizer, Anton, 78573 Wurmlingen (DE); Winkler, Hans-Henning, Dr., 78532 Tuttlingen (DE)
(74) Vertreter: Otten, Hajo, Dr.-Ing.

(56) Entgegenhaltungen:
- EP-A- 0 820 835
- DE-A- 4 027 895
- DE-A- 4 306 093
- US-A- 5 181 898

## Beschreibung

Die vorliegende Erfindung betrifft eine Werkzeugmaschine mit einer ein Werkzeug aufnehmenden Werkzeugspindel, die eine vertikal ausgerichtete Spindelachse aufweist, sowie mit einem Werkstücktisch, auf dessen Oberseite zumindest eine Vorrichtung zum Einspannen eines mit dem Werkzeug zu bearbeitenden Werkstückes angeordnet ist, wobei Werkzeugspindel und Werkstücktisch relativ zueinander in einem Arbeitsbereich verfahrbar sind, in dem das Werkstück angeordnet wird.

Eine derartige Werkzeugmaschine ist aus der DE 43 06 093 A1 bekannt.

Allgemein bekannte Werkzeugmaschinen weisen in der Regel einen Werkstücktisch sowie einen die Werkzeugspindel tragenden Spindelkopf auf, der in drei zueinander orthogonalen Richtungen relativ zu dem Werkstücktisch verfahrbar ist. Es ist auch bekannt, eine oder mehrere der orthogonalen Verfahrrichtungen durch Bewegung des Werkzeugtisches zu realisieren.

Derartige Werkzeugmaschinen mit vertikalachsiger Werkzeugspindel dienen zur spanabhebenden Bearbeitung von unter anderem sperrigen und zum Teil sehr schweren Gegenständen, die mittels einer sogenannten Vorrichtung auf der Oberseite des Werkstücktisches aufgespannt werden. Zur Kühlung des in Betrieb befindlichen Werkzeuges, zur Verbesserung der Schneidwirkung sowie zur Abfuhr der bei der Bearbeitung anfallenden Späne werden je nach Anwendung und Einsatzbereich unterschiedliche Bohr-, Kühlund/oder Spülflüssigkeiten eingesetzt, die im folgenden allgemein mit Kühlmittel bezeichnet werden.

Die Werkzeugmaschinen weisen einen gekapselten Arbeitsraum auf, in dem die Bearbeitung des Werkstückes erfolgt. Dieser gekapselte Arbeitsraum ermöglicht einen sehr hohen Kühlmitteleinsatz, durch den die Späne aus dem Arbeitsbereich, also von dem in Bearbeitung befindlichen Werkstück, dem im Einsatz befindlichen Werkzeug sowie dem Werkstücktisch und anderen Teilen der Werkzeugmaschine abgespült werden.

Es ist bekannt, die Späne über sogenannte Spänerutschen in Auffangbehältern zu transportieren, die im Maschinenfuß der jeweiligen Werkzeugmaschine angeordnet sind. Das anfallende Kühlmittel wird im Maschinenfuß abgesaugt/abgepumpt und für die weitere Verwendung wieder aufgearbeitet, insbesondere gefiltert und zum Teil zusätzlich chemisch gereinigt.

Trotz der Wiederaufarbeitung ist bei diesen Werkzeugmaschinen jede Bearbeitung eines Werkstückes mit einem gewissen Kühlmittelverlust verbunden, was als nachteilig empfunden wird. Ein weiterer Nachteil ergibt sich aus dem Erfordernis der "Wiederaufbereitung" des gebrauchten Kühlmittels, was zusätzliche konstruktive Vorkehrungen erfordert und mit einem gewissen Energieverbrauch verbunden ist.

Aus Umweltschutz- und Kostengründen gehen die Bestrebungen dahin, möglichst wenig Kühlmittel zu verwenden, um die Verluste sowie den Aufwand mit der Wiederaufbereitung zu reduzieren.

Bei einem geringeren Kühlmitteleinsatz besteht jedoch die Gefahr, daß Späne an diversen Stellen im Arbeitsraum der Werkzeugmaschine kleben bleiben, so daß derartige Werkzeugmaschinen häufig von innen "nachgereinigt" werden müssen. Dies geschieht zum Teil dadurch, daß nach dem Bearbeiten eines Werkstückes der Arbeitsraum automatisch mit Druckluft ausgeblasen wird, um die anhaftenden Späne zu entfernen. Darüber hinaus ist es ebenfalls bekannt, diese Reinigungsarbeiten gezielt durch Bedienungspersonal durchführen zu lassen.

Auf diese Weise lassen sich zwar der Kühlmitteleinsatz und damit der mit dem Kühlmitteleinsatz einhergehende Kühlmittelverlust sowie die Kosten für die Wiederaufarbeitung reduzieren, dieser Vorteil wird jedoch durch lohnintensiven Arbeitsaufwand bzw. zusätzlichen konstruktiven Aufwand für das Abblasen mit Druckluft wieder aufgehoben.

Im übrigen hat es sich allgemein herausgestellt, daß die Abfuhr der Späne dennoch häufig nicht zufriedenstellend ist, so daß teilweise sogar eine Nachreinigung von Hand erforderlich ist, was nicht nur weitere Lohnkosten mit sich bringt, sondern zusätzlich unerwünschte Stillstandszeiten der so ausgelegten Werkzeugmaschinen.

Ein weiterer Nachteil ist allgemein noch darin zu sehen, daß die aufgesammelten Späne mit Kühlmittel vermischt sind, so daß vor einer Weiterverarbeitung der Späne z.B. in der Herstellung von Rohlingen eine aufwendige Abscheidung des Kühlmittels erforderlich ist.

Bei der aus der eingangs erwähnten DE 43 06 093 A1 bekannten Werkzeugmaschine sind auf dem Werkstücktisch zwei Vorrichtungen angeordnet, in denen abwechselnd ein Werkstück eingespannt und bearbeitet wird. Zu diesem Zweck wird der Arbeitsbereich durch eine Spritzschutzwand asymmetrisch in eine Bestückungsseite sowie eine Bearbeitungsseite unterteilt, wobei durch Drehung des Werkstücktisches um seine Hochachse Bestückungsseite und Bearbeitungsseite auf dessen Oberseite vertauscht werden können.

Die Spritzschutzwand weist ein unteres Wandteil auf, das starr auf dem Werkstücktisch befestigt ist, sowie ein schwenkbar gelagertes Wandteil, dessen Unterseite lose auf der Oberseite des starren Wandteiles aufliegt und sich beim Anheben und Drehen des Werkstücktisches automatisch hebt und wieder absenkt.

Auch bei dieser Werkzeugmaschine treten die oben erwähnten Nachteile im Zusammenhang mit den entstehenden Spänen auf, die sich auf dem Werkstücktisch ansammeln und dort auch durch sehr großen Kühlmitteleinsatz nicht vollständig entfernt werden können, so daß eine Nachreinigung von Hand erforderlich ist, was immer dann vorgenommen wird, wenn auf der Bestückungsseite ein bearbeitetes Werkstück gegen ein noch zu bearbeitendes Werkstück ausgetauscht wird.

Vor diesem Hintergrund ist es Aufgabe der vorliegenden Erfindung, die eingangs erwähnte Werkzeugmaschine derart weiterzubilden, daß die oben erwähnten Nachteile vermieden werden. Insbesondere soll das Problem der Abfuhr der Späne aus dem Arbeitsbereich auf konstruktiv einfache Weise gelöst werden.

Erfindungsgemäß wird diese Aufgabe bei der eingangs genannten Werkzeugmaschine einerseits dadurch gelöst, daß der Arbeitsbereich sich zumindest teilweise in einer Richtung quer zur Spindelachse außerhalb des Werkstücktisches erstreckt, die Vorrichtung in dieser Richtung über den Tisch hinausragt und dort das Werkstück hält, sowie-vorzugsweise nach unten-offen ist, so daß entstehende Späne in Richtung der Spindelachse frei nach unten fallen können.

Die der Erfindung zugrundeliegende Aufgabe wird auf diese Weise vollkommen gelöst.

Die Erfinder der vorliegenden Anmeldung haben nämlich erkannt, daß überraschenderweise die Nachteile beim Stand der Technik nicht durch andere Kühlmittel oder weitere Vorrichtungen zum Reinigen oder Abblasen des Arbeitsbereiches sondern durch konstruktiv einfache Maßnahmen auf effiziente Weise beseitigt werden können. Weil die Vorrichtung jetzt über den Werkstücktisch hinausragt sowie nach unten offen ist und das Werkstück sozusagen neben, in der Regel hinter dem Werkstücktisch bearbeitet wird, gelangen so gut wie keine Späne mehr auf den Werkstücktisch selbst oder auf die Vorrichtung, sie fallen vielmehr durch die Vorrichtung hindurch nach unten in den Maschinenfuß. Diese Maßnahme läßt sich besonders vorteilhaft im Zusammenhang mit einer sogenannten Minimalmengenschmierung verwenden, wie sie z.B. aus der DE 42 00 808 A1 oder der DE 195 38 762 C2 bekannt ist. Bei einer Minimalmengenschmierung wird Kühlmittel in sehr geringen Mengen eingesetzt, so daß nur noch die Kühlung des Werkzeuges sowie eine hinreichend gute Schneidqualität sichergestellt ist. Die dabei entstehenden Späne sind quasi nicht mehr mit Kühlmittel benetzt, können also weder am Werkstück noch am Werkzeug oder anderen Teilen der Werkzeugmaschine anhaften.

Neben der guten Abfuhr der Späne ergibt sich bei der neuen Werkzeugmaschine im Zusammenhang mit einer Minimalmengenschmierung also der weitere Vorteil, daß die Aufarbeitung der Späne deutlich vereinfacht wird und die Kosten für die Kühlmittelrückgewinnung quasi entfallen.

Insgesamt ist es bei der neuen Werkzeugmaschine auch nicht mehr erforderlich, den Arbeitsraum mit besonderen Reinigungsvorrichtungen zu versehen bzw. diesen häufig von Hand nachzureinigen, obwohl natürlich weitere Reinigungsvorrichtungen aus hier nicht interessierenden Gründen vorgesehen sein können.

Auch bestehende Werkzeugmaschinen lassen sich erfindungsgemäß umrüsten, hierzu ist es lediglich erforderlich, die Tischplatte des Werkstücktisches soweit zu verkleinern, daß der bei bestehenden Werkzeugmaschinen oberhalb des Werkstücktisches liegende Arbeitsbereich zumindest teilweise seitlich über den nun verkleinerten Werkstücktisch hinausragt. Statt der üblichen Vorrichtung ist ferner noch eine Vorrichtung auf der Oberseite des verkleinerten Werkstücktisches anzubringen, die in Richtung des Spindelstockes über den Werkstücktisch hinausragt und dort das Werkstück trägt sowie nach unten offen ist.

Eine derartige "asymmetrische" Aufspannung eines Werkstückes begegnet im klassischen Werkzeugmaschinenbau großen Vorurteilen, weil die Gefahr besteht, daß durch Verkippen der Vorrichtung die Bearbeitungsgenauigkeit leidet. Die Erfinder der vorliegenden Anmeldung haben nun jedoch festgestellt, daß insbesondere bei vertikalachsigen Werkzeugmaschinen, bei denen die Tischoberfläche des Werkstücktisches also horizontal verläuft, Vorrichtungen verwendet werden können, die im Rahmen der erforderlichen Genauigkeit starr sind und sich auf dem Werkstücktisch unverrückbar befestigen lassen. Mit anderen Worten, es ist wider Erwarten doch möglich, das zu bearbeitende Werkstück seitlich außerhalb des Umrisses des Werkstücktisches zu halten, ohne daß die Barbeitungsgenauigkeit leidet.

Es sei noch erwähnt, daß bei bestehenden Werkzeugmaschinen statt einer Verkleinerung der Tischfläche auch Durchbrüche oder Aussparungen in der Tischfläche vorgesehen sein können.

In einer Weiterbildung ist es dann bevorzugt, wenn die Vorrichtung das Werkstück um eine Achse quer zur Spindelachse aktiv drehbar lagert, vorzugsweise um mindestens ca. 180° drehbar lagert.

Hier ist von Vorteil, daß nach einem Bearbeitungsvorgang an der Oberseite des Werkstückes die Vorrichtung dieses um 180° drehen kann, so daß Späne von dem Werkstück sowie aus darin eingebrachten Bohrungen etc. nach unten herausfallen können. Wegen des deutlich verringerten Kühlmitteleinsatzes kleben diese Späne nicht am Werkstück fest, sondern fallen nach unten in den Maschinenfuß, wie die Erfinder der vorliegenden Anmeldung gefunden haben.

Mit anderen Worten, bei einer erfindungsgemäß ausgestalteten Werkzeugmaschine ist kein oder nur ein geringer Kühlmitteleinsatz erforderlich, um das Werkzeug zu kühlen und ggf. um für eine entsprechende Bearbeitungsqualität zu sorgen, die Späne werden aus dem Arbeitsbereich sozusagen durch die Schwerkraftwirkung entfernt, hierfür ist kein zusätzliches Kühlmittel erforderlich.

Ferner ist es bevorzugt, wenn die Werkzeugmaschine unterhalb der Vorrichtung zumindest ein Ablenkblech für herunterfallende Späne aufweist, wobei weiter vorzugsweise zwei Ablenkbleche vorgesehen sind, die ein oben abgerundetes, spitz zulaufendes Dach bilden.

Hier ist von Vorteil, daß die herunterfallenden Späne im Maschinenfuß definiert weitergeleitet werden. Der Einsatz von großflächigen Ablenkblechen ist möglich, weil die Späne nicht so sehr mit Kühlmittel benetzt sind, daß sie unerwünscht an den Ablenkblechen haften könnten.

Weiter ist es bevorzugt, wenn das oder jedes Ablenkblech unten in einer Rinne endet und weiter vorzugsweise in der Rinne ein mechanischer Späneförderer angeordnet ist, der vorzugsweise ein Schneckenförderer ist.

Hier ist von Vorteil, daß die Späne auf mechanisch einfache Weise weitertransportiert werden können, um sie z.B. in eine Spänewanne zu bringen, die von Zeit zu Zeit durch Bedienungspersonal ausgetauscht wird. Weil die Späne jetzt sozusagen "trocknen" sind, können sie in einer Rinne über einen mechanischen Späneförderer weitertransportiert werden, auf dem bisher erforderlichen Einsatz von Flüssigkeit kann verzichtet werden. Auch diese Maßnahme trägt also dazu bei, den Kühlmitteleinsatz zu reduzieren.

Andererseits wird diese Aufgabe bei der eingangs genannten Werkzeugmaschine dadurch gelöst, daß oberhalb des Werkstücktisches eine den Arbeitsbereich vorzugsweise asymmetrisch-in eine Bestückungsseite sowie eine Bearbeitungsseite unterteilende Mittentrennwand angeordnet ist, die ein die Oberseite des Werkstücktisches zumindest größtenteils abdeckendes, dachförmiges Unterteil aufweist, unter dem Versorgungsleitungen für die Vorrichtung sowie sonstige Installationen auf und/oder an dem Werkstücktisch anzuordnen sind.

Auch auf diese Weise wird die der Erfindung zugrundeliegende Aufgabe vollkommen gelöst, denn die Erfinder der vorliegenden Anmeldung haben erkannt, daß es insbesondere bei der in y-Richtung über den Werkstücktisch hinausragenden Vorrichtung zu einer deutlich verbesserten Späneabfuhr kommt, wenn ein dachartiges Unterteil der Mittentrennwand eingesetzt wird, das den Werkstücktisch abdeckt.

Auf diese Weise können die Zuleitungen oder sonstigen Installationen, zu denen z.B. eine Laser-Meßvorrichtung zählen, unterhalb dieses "Daches" angeordnet werden, so daß sich an, auf und zwischen ihnen keine Späne verfangen können, die nur manuell entfernbar sind. Insbesondere dann, wenn die über den Werkstücktisch hinausragende Vorrichtung zum Einspannen des zu bearbeitenden Werkstückes eingesetzt wird, läßt sich auf diese Weise der gesamte Werkstücktisch abdecken, so daß jetzt nicht mehr auf eine besonders "spänefeindliche" Anordnung der Verbindungsleitungen etc. geachtet werden muß. Insgesamt ergibt sich damit trotz des auf den ersten Blick größeren Konstruktionsaufwandes für die Mittentrennwand ein geringerer Konstruktionsaufwand für die Werkzeugmaschine allgemein. Ein großer Vorteil liegt darin, daß auf aufwendige Maßnahmen zur Entfernung von sich ansammelnden Spänen verzichtet werden kann, erfindungsgemäß wird nämlich dafür gesorgt, daß sich auf der Oberseite des Werkstücktisches überhaupt keine Späne mehr ansammeln können, denn diese werden von dem Dach auf dem Werkstücktisch so abgeleitet, daß sie in Spänewannen oder auf weitere Späneleitbleche fallen.

Allgemein ist es dabei bevorzugt, wenn die Mittentrennwand ein um eine quer zur Spindelachse verlaufende Schwenkachse verschwenkbar gelagertes Wandteil umfaßt, das mit seinem vorzugsweise abgewinkelten unteren Abschnitt auf einen vorzugsweise abgerundeten First des Unterteiles aufliegt.

Diese Maßnahme ist an sich bereits aus der DE 43 06 093 A1 bekannt, sie ermöglicht die Anordnung von zwei Vorrichtungen auf einem Werkstücktisch, der zum Vertauschen von Bestückungsseite und Bearbeitungsseite lediglich um seine Hochachse um 180° gedreht werden muß. Die Mittentrennwand ermöglicht jetzt auf der größeren Bearbeitungsseite eine Bearbeitung des dort eingespannten Werkstückes während gleichzeitig auf der Bestückungsseite eine Bedienungsperson ein neues Werkstück einspannen kann, ohne daß herumfliegende Späne oder herumspritzendes Kühlmittel auf die Bestückungsseite gelangen können. Durch die abgewinkelte Ausbildung des unteren Abschnittes des schwenkbar gelagerten Wandteiles wird ferner dafür gesorgt, daß dort auftreffende Späne oder auftreffendes Kühlmittel abgeführt werden.

Weiter ist es noch bevorzugt, wenn das dachförmige Unterteil sich zu beiden Seiten der Vorrichtung über den Werkstücktisch hinaus erstreckt, wobei das dachartige Unterteil vorzugsweise eine Schürze aufweist, die sich in die Vorrichtung hinein erstreckt.

Diese Maßnahme sorgt für eine besonders effektive Abdeckung und Abfuhr von Spänen. Zu beiden Seiten der Vorrichtung wirkt das dachförmige Unterteil als Späneleitblech, so daß sich dort keine Späne mehr ansammeln können, während innerhalb der Vorrichtung, also z.B. zwischen zwei Wangen der Vorrichtung, eine Schürze hineinragt, die verhindert, daß sich dort Späne ablagern können.

Weitere Vorteile ergeben sich aus der Beschreibung und der beigefügten Zeichnung.

Ein Ausführungsbeispiel der Erfindung ist in der Zeichnung dargestellt und wird in der nachfolgenden Beschreibung näher erläutert. Es zeigen:
- Fig. 1: eine schematische Seitenansicht der neuen Werkzeugmaschine;
- Fig. 2: eine ausschnittsweise Ansicht der Werkzeugmaschine aus Fig. 1 längs des Pfeiles II;
- Fig. 3: eine Seitenansicht eines Werkstücktisches für eine Werkzeugmaschine aus Fig. 1 mit zwei Vorrichtungen sowie einer Mittentrennwand; und
- Fig. 4: eine Draufsicht auf den Werkstücktisch aus Fig. 3.

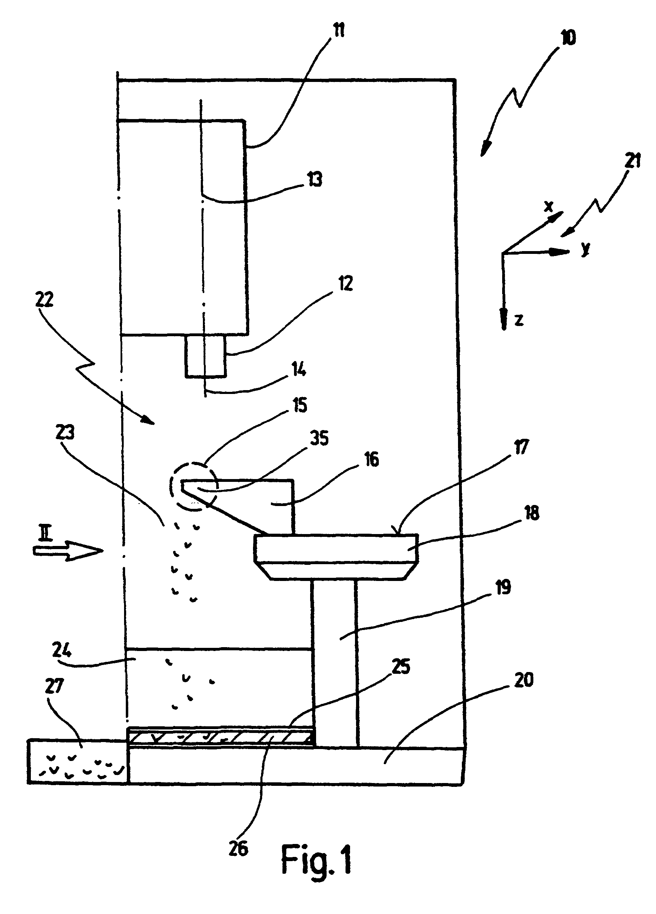

In Fig. 1 ist mit 10 eine Werkzeugmaschine bezeichnet, die in einer ausschnittsweisen schematischen Darstellung gezeigt ist. Die Werkzeugmaschine 10 umfaßt einen Spindelkopf 11, in dem eine Werkzeugspindel 12 um eine vertikale Spindelachse 13 drehbar gelagert ist. In der Werkzeugspindel 12 ist ein Werkzeug 14 aufgenommen, das zur Bearbeitung eines bei 15 angedeuteten Werkstückes dient.

Das Werkstück 15 ist in einer in Seitenansicht gezeigten Vorrichtung 16 eingespannt, die auf einer Oberseite 17 eines Werkstücktisches 18 angeordnet ist. Der Werkstücktisch 18 sitzt auf einem Fuß 19, der wiederum im Maschinenfuß 20 der Werkzeugmaschine 10 verankert ist.

Wie es durch ein Koordinatensystem 21 angedeutet ist, ist der Spindelkopf in drei zueinander orthogonalen Richtungen relativ zum Werkstücktisch 18 in einem bei 22 angedeuteten Arbeitsbereich verfahrbar. In diesen Arbeitsbereich ragt die Vorrichtung 16 in y-Richtung seitlich über den Werkstücktisch 18 hinaus und hält dort das Werkstück 15 zur Bearbeitung mit dem Werkzeug 14 bereit.

Die dabei entstehenden Späne sind bei 23 angedeutet. Da die Vorrichtung 16 über den Werkstücktisch 18 hinausragt und nach unten offen ist, fallen die Späne 23 in Richtung der Spindelachse 13 nach unten und treffen dabei auf ein Ablenkblech 24, das unten in eine Rinne 25 mündet. In der Rinne 25 ist ein schematisch angedeuteter, mechanischer Späneförderer 26 angeordnet, der die Späne in eine Spänewanne 27 transportiert.

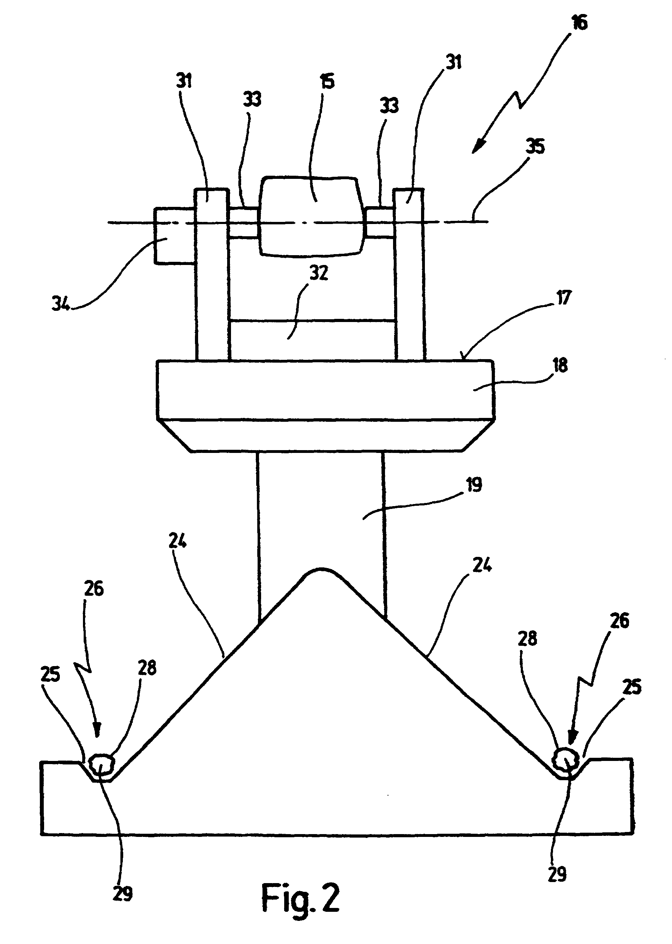

In Fig. 2 ist die Werkzeugmaschine 10 in einer Ansicht in Richtung des Pfeiles II aus Fig. 1 gezeigt. Es ist zu erkennen, daß zwei Ablenkbleche 24 vorgesehen sind, die ein oben abgerundetes, spitz zulaufendes Dach bilden, an dem die Späne links und rechts in die Rinnen 25 hinunterrutschen. In diesen Rinnen 25 sind die Späneförderer 26 angeordnet, die in dem gezeigten Ausführungsbeispiel Schneckenförderer 28 sind, also im einfachsten Falle eine drehbar angetriebene Schneckenwelle 29 umfassen, die bei ihrer Drehung die Späne 23 in Richtung ihrer Gangsteigung transportiert.

Die in Fig. 2 zu erkennende Vorrichtung 16 umfaßt zwei parallel zueinander angeordnete Wangen, die an einem Sockel 32 befestigt sind, der auf die Oberseite 17 des Werkstücktisches 18 in geeigneter Weise aufgeschraubt ist. An den Wangen 31 sind aufeinander zu weisende Spannvorrichtungen 33 vorgesehen, die z.B. durch Spannfutter gebildet sein können. Die Spannvorrichtungen 33 nehmen zwischen sich das Werkstück 15 auf, das sie mittels eines Motors 34 um eine Achse 35 drehen können, die auch in Fig. 1 gezeigt ist. Die Achse 35 verläuft quer zur Spindelachse 13. Zwischen den Wangen 31 ist die Vorrichtung von unten frei zugängig, also nach unten offen.

Bei der Bearbeitung eines Werkstückes 15 in der neuen Werkzeugmaschine 10 ist nur ein geringer Kühlmitteleinsatz erforderlich, um das jeweilige Werkzeug 14 zu kühlen und ggf. für eine gute Schneidqualität zu sorgen. Die entstehenden Späne 23 sind überwiegend "trocknen", so daß sie nicht an der Vorrichtung 16, dem Werkstück 15 oder den Ablenkblechen 24 anhaften, sondern infolge der Schwerkraft in die Rinnen 25 hineinfallen, wo sie mittels der Schneckenförderer 28 in die Spänewanne 27 transportiert werden.

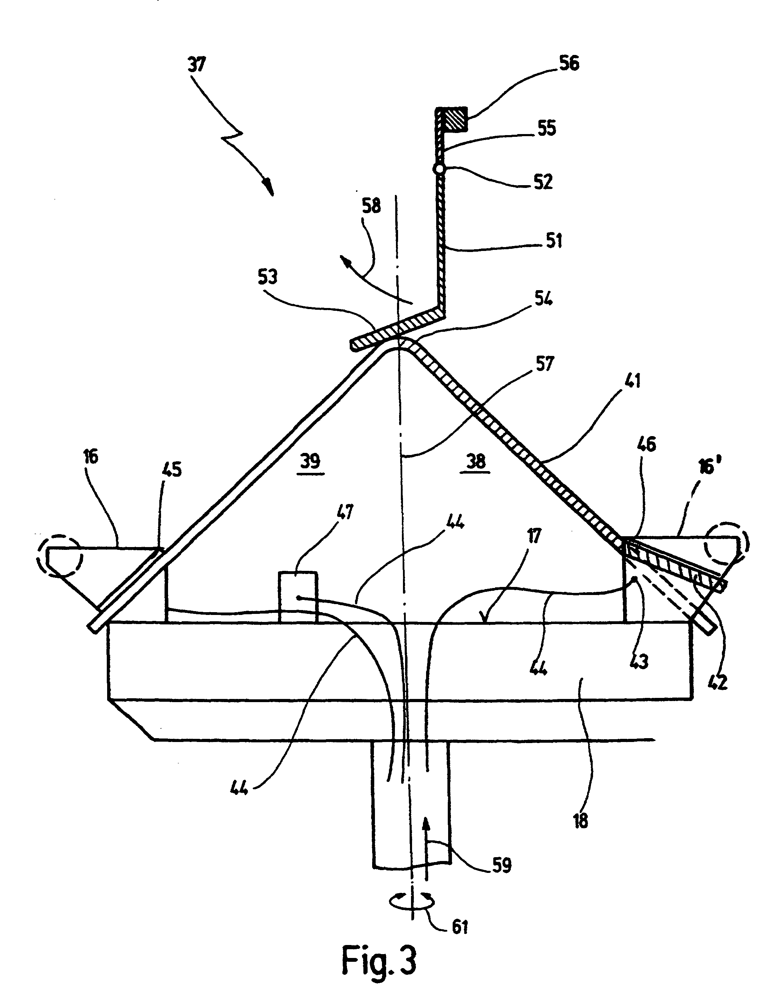

In Fig. 3 ist in einer schematischen Seitenansicht ein Werkstücktisch 18 gezeigt, dessen Oberseite 17 durch eine Mittentrennwand 37 asymmetrisch in eine Bestückungsseite 38 sowie eine größere Bearbeitungsseite 39 unterteilt wird. Sowohl auf der Bestückungsseite 38 als auch auf der Bearbeitungsseite 39 ist jeweils eine Vorrichtung 16 bzw. 16' angeordnet. Während das in der Vorrichtung 16 eingespannte Werkstück bearbeitet wird, kann in die Vorrichtung 16' ein neues Werkstück eingespannt werden, wobei eine Bedienungsperson vor herumfliegenden Spänen und herumspritzendem Kühlwasser durch die Mittentrennwand 37 geschützt wird.

Die Mittentrennwand 37 umfaßt ein dachförmiges Unterteil 41, das die Oberseite 17 des Werkstücktisches 18 nahezu vollständig abdeckt. Im Bereich der Vorrichtung 16' ist das dachförmige Unterteil 41 geschnitten dargestellt, wobei von der Vorrichtung 16' nur die hintere Wange 31' gezeigt ist.

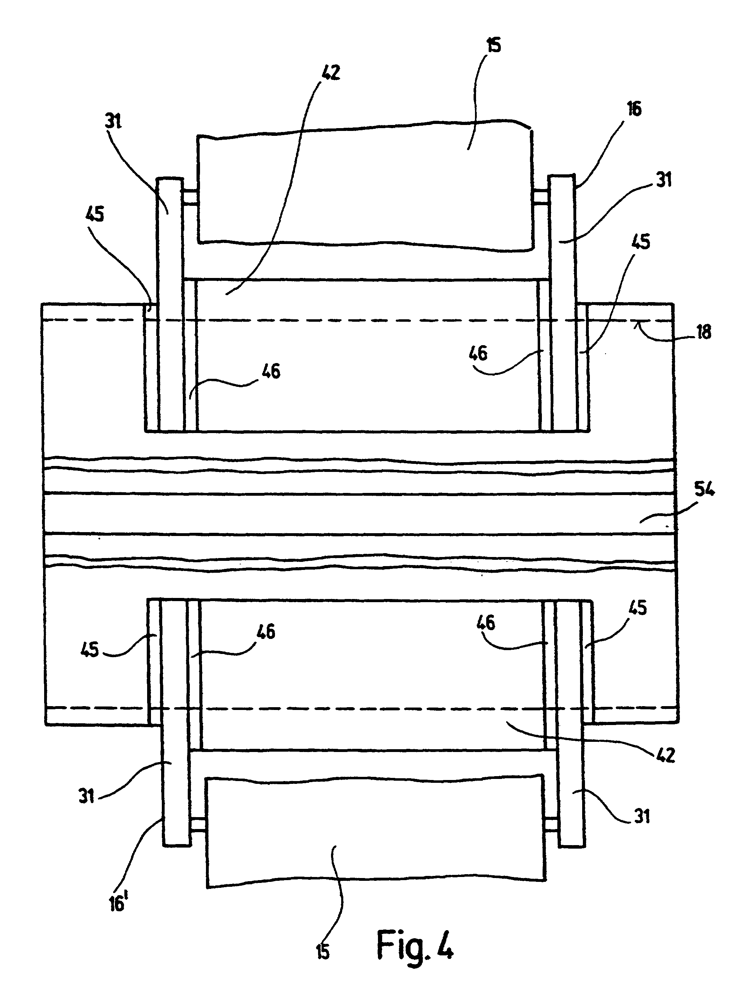

Das dachförmige Unterteil 41 erstreckt sich zu beiden Seiten der Vorrichtung 16 bzw. 16' über den Werkstücktisch 18 hinaus, wie es insbesondere aus der Draufsicht der Fig. 4 zu erkennen ist. Zwischen die beiden Wangen 31 der Vorrichtung 16 bzw. 16' erstreckt sich eine verglichen mit dem übrigen dachförmigen Unterteil 41 hochgeklappte Schürze 42, die zum einen die Oberseite 17 des Werkstücktisches 18 in diesem Bereich vor Spänebefall schützt, zum anderen aber Anschlußpunkte 43 der Vorrichtungen 16, 16' freigibt, über die sie mit Verbindungsleitungen 44 verbunden sind, die in der üblichen Weise für die Zufuhr von pneumatischer und/oder elektrischer Energie, die Abfrage von Meßsignalen etc. dienen.

Im Bereich der Wangen 31 ist sowohl das dachförmige Unterteil 41 als auch die Schürze 42 mit hochgebogenen Randbereichen 45 bzw. 46 versehen, die außen bzw. innen eng an den Wangen 31 anliegen und es verhindern, daß Späne zwischen die Wangen 31 sowie das dachförmige Unterteil 41 bzw. die Schürze 42 fallen.

In der schematischen Seitenansicht der Fig. 3 ist noch zu erkennen, daß auf der Oberseite 17 des Werkstücktisches 18 eine weitere Installation 47 angeordnet ist, die z.B. ein Laser-Meßsystem sein kann. Sowohl die Verbindungsleitungen 44 als auch die weitere Installation 47 sind durch das dachförmige Unterteil 41 vor Späne und Kühlmittel geschützt, die Späne werden von dem dachförmigen Unterteil 41 sowie der Schürze 42 nach der Art von Späneleitblechen über den Rand des Werkstücktisches 18 geleitet, so daß sie nach unten fallen und dort über die Ablenkbleche 24 in eine entsprechende Spänewanne 27 transportiert werden.

Oberhalb des dachförmigen Unterteiles 41 ist die Mittentrennwand 37 so ausgebildet, wie es aus der eingangs erwähnten DE 43 06 093 A1 bekannt ist, deren Inhalt hiermit zum Offenbarungsgehalt der vorliegenden Anmeldung gemacht wird.

Die Mittentrennwand umfaßt nämlich ein Wandteil 51, das schwenkbar an einer Schwenkachse 52 gelagert ist, die parallel zur Oberseite 17 und damit quer zur Spindelachse 13 verläuft. Das Wandteil 51 liegt mit seinem abgewinkelten unteren Abschnitt 53 auf einem abgerundeten First 54 des dachförmigen Unterteiles 41 auf. An der Schwenkachse 52 ist das Wandteil 51 an einem starren, oberen Wandteil 55 befestigt, das in bekannter Weise an einem Querbalken 56 angebracht ist.

Wenn der Werkstücktisch 18 um seine bei 57 angedeutete Hochachse verschwenkt werden soll, um Bestückungsseite 38 und Bearbeitungsseite 39 zu vertauschen, wird er zunächst in Richtung eines Pfeiles 58 angehoben, um entsprechende Stirnverzahnungen außer Eingriff zu bringen. Bei diesem Anheben des Werkstücktisches 18 verschwenkt das Wandteil 51 um die Schwenkachse 52 in Richtung eines Pfeiles 59 und gleitet dann mit seinem abgewinkelten, unteren Abschnitt 53 auf dem First 54 entlang, wenn der Werkstücktisch 18 in Richtung eines Pfeiles 61 verschwenkt wird. Dieser Vorgang ist in der bereits erwähnten DE 43 06 093 A1 beschrieben, so daß wegen weiterer Informationen auf diese Druckschrift verwiesen werden darf.

Abschließend sei noch erwähnt, daß durch die Abwinkelung des unteren Abschnittes 43 Späne, die dort auf die Mittentrennwand 37 treffen, abgelenkt werden und über das dachförmige Unterteil 41 auf die Ablenkbleche 24 geleitet werden.

## Patentansprüche

1. Werkzeugmaschine mit einer ein Werkzeug (14) aufnehmenden Werkzeugspindel (12), die eine vertikal ausgerichtete Spindelachse (13) aufweist, sowie mit einem Werkstücktisch (18), auf dessen Oberseite (17) zumindest eine Vorrichtung (16) zum Einspannen eines mit dem Werkzeug (14) zu bearbeitenden Werkstückes (15) angeordnet ist, wobei Werkzeugspindel (12) und Werkstücktisch (18) relativ zueinander in einem Arbeitsbereich (22) verfahrbar sind, in dem das Werkstück (15) angeordnet wird,
**dadurch gekennzeichnet, daß** der Arbeitsbereich (22) sich zumindest teilweise in einer Richtung (Y) quer zur Spindelachse (13) außerhalb des Werkstücktisches (18) erstreckt, die Vorrichtung (16) in dieser Richtung (Y) über den Werkstücktisch (18) hinausragt und dort das Werkstück (15) hält, sowie-vorzugsweise nach unten-offen ist, so daß entstehende Späne (23) in Richtung der Spindelachse (13) frei nach unten fallen können.

2. Werkzeugmaschine mit einer ein Werkzeug (14) aufnehmenden Werkzeugspindel (12), die eine vertikal ausgerichtete Spindelachse (13) aufweist, sowie mit einem Werkstücktisch (18), auf dessen Oberseite (17) zumindest eine Vorrichtung (16) zum Einspannen eines mit dem Werkzeug (14) zu bearbeitenden Werkstückes (15) angeordnet ist, wobei Werkzeugspindel (12) und Werkstücktisch (18) relativ zueinander in einem Arbeitsbereich (22) verfahrbar sind, in dem das Werkstück (15) angeordnet wird, **dadurch gekennzeichnet, daß** oberhalb des Werkstücktisches (18) eine den Arbeitsbereich (22)-vorzugsweise asymmetrisch-in eine Bestückungsseite (38) sowie eine Bearbeitungsseite (39) unterteilende Mittentrennwand (37) angeordnet ist, die ein die Oberseite (17) des Werkstücktisches (18) zumindest größtenteils abdeckendes, dachförmiges Unterteil (41) aufweist, unter dem Versorgungsleitungen (44) für die Vorrichtung (16) sowie sonstige Installationen (47) auf und/oder an dem Werkstücktisch (18) anzuordnen sind.

3. Werkzeugmaschine nach Anspruch 1 oder 2, **dadurch gekennzeichnet, daß** die Vorrichtung (16) das Werkstück (15) um eine Achse (35) quer zur Spindelachse (13) aktiv drehbar lagert.

4. Werkzeugmaschine nach Anspruch 3, **dadurch gekennzeichnet, daß** die Vorrichtung (16) das Werkstück (15) um mindestens ca. 180° drehbar lagert.

5. Werkzeugmaschine nach einem der Ansprüche 1 bis 4, **dadurch gekennzeichnet, daß** sie unterhalb der Vorrichtung (16) zumindest ein Ablenkblech (24) für herunterfallende Späne (23) aufweist.

6. Werkzeugmaschine nach Anspruch 5, **dadurch gekennzeichnet, daß** zwei Ablenkbleche (24) vorgesehen sind, die ein oben abgerundetes, spitz zulaufendes Dach bilden.

7. Werkzeugmaschine nach Anspruch 5 oder 6, **dadurch gekennzeichnet, daß** das oder jedes Ablenkblech (24) unten in einer Rinne (25) endet.

8. Werkzeugmaschine nach Anspruch 7, **dadurch gekennzeichnet, daß** in der Rinne (25) ein mechanischer Späneförderer (26) angeordnet ist.

9. Werkzeugmaschine nach Anspruch 8, **dadurch gekennzeichnet, daß** der Späneförderer (26) ein Schneckenförderer (28) ist.

10. Werkzeugmaschine nach Anspruch 2 oder einem der Ansprüche 3 bis 9, **dadurch gekennzeichnet, daß** die Mittentrennwand (37) ein um eine quer zur Spindelachse (13) verlaufende Schwenkachse (52) verschwenkbar gelagertes Wandteil (51) umfaßt, das mit seinem vorzugsweise abgewinkelten unteren Abschnitt (53) auf einem vorzugsweise abgerundeten First (54) des dachförmigen Unterteiles (41) aufliegt.

11. Werkzeugmaschine nach Anspruch 2 oder 10, **dadurch gekennzeichnet, daß** das dachförmige Unterteil (41) sich zu beiden Seiten der Vorrichtung (16) über den Werkstücktisch (18) hinaus erstreckt.

12. Werkzeugmaschine nach Anspruch 2 oder einem der Ansprüche 3 bis 11, **dadurch gekennzeichnet, daß** das dachförmige Unterteil (41) eine Schürze (42) aufweist, die sich in die Vorrichtung (16) hineinerstreckt.

## Claims

1. A machine tool having a tool spindle (12) receiving a tool (14) and having a vertically oriented spindle axis (13), as well as a workpiece table (18) having on its upper side (17) arranged at least one fixture (16) for clamping in a workpiece (15) to be machined with the tool (14), whereby said tool spindle (12) and workpiece table (18) are displaceable relative to each other within a working area (22), the workpiece (15) being arranged in said working area,
**characterized in that** the working area (22) extends at least partially outside said workpiece table (18) in a direction (Y) transverse to said spindle axis (13), said fixture (16) projects in this direction (Y) beyond the workpiece table (18) and carries said workpiece (15) beyond the workpiece table, said fixture being open preferably at the bottom so that chips (23) that are produced during machining are falling freely downward in the direction of the spindle axis (13).

2. A machine tool having a tool spindle (12) receiving a tool (14) and having a vertically oriented spindle axis (13), as well as a workpiece table (18) having on its upper side (17) arranged at least one fixture (16) for clamping in a workpiece (15) to be machined with the tool (14), whereby said tool spindle (12) and workpiece table (18) are displaceable relative to each other within a working area (22), the workpiece (15) being arranged in said working area,
**characterized in that** above said workpiece table (18) a center partition wall (37) is arranged that divides the working area (23) - preferably asymmetrically - into a loading side (38) and a machining side (39), said center partition wall comprising a roof-shaped lower part (41), covering at least most of the upper side (17) of the workpiece table (18), supply lines (44) for the fixture (16) and further installations (47) being provided beneath the lower part on or at the workpiece table (18).

3. The machine tool of claim 1 or claim 2, **characterized in that** the fixture (16) supports the workpiece (15) in actively rotatable fashion about an axis (35) transverse to said spindle axis (13).

4. The machine tool of claim 3, **characterized in that** the fixture (16) supports the workpiece (15) rotatably through at least approximately 180°.

5. The machine tool of anyone of claims 1 through 4, **characterized in that** it comprises below the fixture (16) at least one deflector panel (24) for falling chips (23).

6. The machine tool of claim 5, **characterized in that** two deflector panels (24) are provided, forming a roof that is rounded at the top and tapers to a point.

7. The machine tool of claim 5 or claim 6, **characterized in , that** the or each deflector panel (24) ends at the bottom in a channel (25).

8. The machine tool of claim 7, **characterized in that** a mechanical chip conveyor (46) is arranged in said channel (25).

9. The machine tool of claim 8, **characterized in that** the chip conveyor (26) is a screw conveyor (28).

10. The machine tool of claim 1 or any of claims 3 through 9, **characterized in that** the center partition wall (37) comprises a wall part (51), mounted pivotably about a pivot axis (52) running transverse to the spindle axis (13), that rests with its preferably angled lower section (53) on a preferably rounded ridge (54) of the roof-shaped lower part (41).

11. The machine tool of claim 2 or claim 10, **characterized in that** the roof-shaped lower part (41) extends beyond the workpiece table (18) on both sides of the fixture (16).

12. The machine tool of claim 2 or anyone of claims 3 through 11, **characterized in that** the roof-shaped lower part (41) comprises a skirt (42) that extends into said fixture (16).

## Revendications

1. Machine-outil avec une broche d'outil (12) pour le logement d'un outil (14), comportant un axe de broche (13) vertical, et avec une table porte-pièce (18), sur le côté supérieur (17) de laquelle se trouve au moins un dispositif (16) pour serrer une pièce (15) à usiner avec l'outil, la broche d'outil (12) et la table porte-pièce (18) étant mobiles l'une par rapport à l'autre dans une zone de travail (22) dans laquelle se trouve la pièce (15), **caractérisée en ce que** la zone de travail (22) s'étend au moins partiellement dans une direction (Y) perpendiculaire à l'axe de la broche (13) à l'extérieur de la table porte-pièce (18), le dispositif (16) dépasse dans cette direction (Y) au-dessus de la table porte-pièce (18) et maintient la pièce (15), et est ouvert - de préférence vers le bas, de telle sorte que les copeaux (23) produits peuvent tomber librement vers le bas en direction de l'axe de la broche (13).

2. Machine-outil avec une broche d'outil (12) pour le logement d'un outil (14), comportant un axe de broche (13) vertical, ainsi qu'une table porte-pièce (18), sur le côté supérieur (17) de laquelle se trouve au moins un dispositif (16) pour serrer une pièce (15) à usiner avec l'outil, la broche d'outil (12) et la table porte-pièce (18) étant mobiles l'une par rapport à l'autre dans une zone de travail (22) dans laquelle se trouve la pièce (15), **caractérisée en ce qu'**au-dessus de la table porte-pièce (18), se trouve une paroi de séparation centrale (37) divisant la zone de travail (22), de préférence de manière asymétrique, en un côté d'équipement (38) et un côté d'usinage (39), qui comporte une partie supérieure (41) en forme de toit recouvrant au moins en grande partie la partie supérieure (17) de la table porte-pièce (18), en dessous de laquelle des conduites d'alimentation (47) doivent être disposées sur et/ou sur le côté de la table porte-pièce (18).

3. Machine-outil selon la revendication 1 ou 2, **caractérisée en ce que** le dispositif (16) loge de manière rotative et active la pièce (15) autour d'un axe (35) perpendiculaire à l'axe de la broche (13).

4. Machine-outil selon la revendication 3, **caractérisée en ce que** le dispositif (16) loge de manière rotative la pièce (15) sur au moins environ 180°.

5. Machine-outil selon l'une des revendication 1 à 4, **caractérisée en ce qu'**elle comporte, en dessous du dispositif (16), au moins une tôle de déviation (24) pour les copeaux (23) qui tombent.

6. Machine-outil selon la revendication 5, **caractérisée en ce que** deux tôles de déviation (24) sont prévues, qui constituent un toit à forte pente arrondi en haut.

7. Machine-outil selon la revendication 5 ou 6, **caractérisée en ce que** la ou chaque tôle de déviation (24) se termine en bas par une gouttière (25).

8. Machine-outil selon la revendication 7, **caractérisée en ce que**, dans la gouttière (25), se trouve un convoyeur de copeaux (26).

9. Machine-outil selon la revendication 8, **caractérisée en ce que** le convoyeur de copeaux (26) est un convoyeur à vis sans fin (28).

10. Machine-outil selon la revendication 2 ou une des revendication 3 à 9, **caractérisée en ce que** la paroi de séparation centrale (37) comprend une partie de paroi (51), logée de manière pivotante autour d'un axe de pivotement (52) perpendiculaire à l'axe de la broche (13), qui s'appuie, avec son tronçon inférieur (53) de préférence plié, sur un faîte (54), de préférence arrondi, de la partie inférieure (41) en forme de toit.

11. Machine-outil selon la revendication 2 ou 10, **caractérisée en ce que** la partie inférieure (41) en forme de toit s'étend des deux côtés du dispositif (16) au-dessus de la table porte-pièce (18).

12. Machine-outil selon la revendication 2 ou une des revendication 3 à 11, **caractérisée en ce que** la partie inférieure (41) en forme de toit comporte un tablier (42) qui pénètre dans le dispositif (16).
